Europäisches Patentamt

European Patent Office

Office européen des brevets

(19)

(11) Numéro de publication : **0 354 861 B1**

(12)

# FASCICULE DE BREVET EUROPEEN

(45) Date de publication du fascicule du brevet :
20.05.92 Bulletin 92/21

(51) Int. Cl.⁵ : **G01N 15/08, G05D 7/01**

(21) Numéro de dépôt : **89430022.7**

(22) Date de dépôt : **10.08.89**

(54) **Dispositif, application et procédé de fabrication d'un régulateur de très faible débit gazeux à vitesse d'écoulement soniquepour les mesures d'adsorption et de désorption gazeuse.**

(30) Priorité : **12.08.88 FR 8810972**

(43) Date de publication de la demande :
**14.02.90 Bulletin 90/07**

(45) Mention de la délivrance du brevet :
**20.05.92 Bulletin 92/21**

(84) Etats contractants désignés :
**BE CH DE ES GB IT LI NL**

(56) Documents cités :
**FR-A- 1 515 676
US-A- 2 664 111
US-A- 3 139 747
US-A- 3 211 007
US-A- 4 489 593**

(73) Titulaire : **CENTRE NATIONAL DE LA
RECHERCHE SCIENTIFIQUE (CNRS)
15, Quai Anatole France
F-75700 Paris Cedex 07 (FR)**

(72) Inventeur : **Rouquerol, Jean
104, Traverse du Diable
F-13012 - Marseille (FR)**
Inventeur : **Davy, Loic Joseph
Résidence Les Comtes Nord - C2
F-13012 - Marseille (FR)**

(74) Mandataire : **Moretti, René et al
c/o Cabinet BEAU DE LOMENIE
"Prado-Mermoz" 232, Avenue du Prado
F-13008 Marseille (FR)**

EP 0 354 861 B1

Jouve, 18, rue Saint-Denis, 75001 PARIS

## Description

La présente invention a pour objet des dispositifs, des applications et des procédés de fabrication d'un régulateur capable d'assurer de très faible débit à écoulement sonique pour des mesures d'adsorption et de désorption gazeuses.

Le secteur technique de l'invention est celui de la fabrication de matériel de mesure de volumétrie gazeuse. Une application de l'invention est la détermination de l'aire spécifique d'un adsorbant par l'introduction continue de gaz adsorbable avec une très grande précision.

Il est connu en effet, que l'adsorption gazeuse (rétention des gaz à la surface) par les solides poreux ou divisés (tels que catalyseurs, adsorbants de purification ou de séparation des gaz ou des liquides, pigments, liants hydrauliques, charges pour caoutchouc ou plastiques, poudres phytosanitaires etc...) est un phénomène très exploité pour caractériser l'état de surface, le degré de division et la porosité de ces solides. Les gaz utilisés pour ces caractérisations sont tantôt chimisorbés (en particulier $H_2$, $CO$, $NH_3$, $O_2$ ainsi que divers hydrocarbures) tantôt physisorbés (en particulier $N_2$, $Ar$, $Kr$, $CO_2$, $H_2O$). La quantification et l'exploitation du phénomène d'adsorption passe toujours par la détermination des isothermes d'adsorption plus ou moins complète, c'est-à-dire les courbes donnant, à une température donnée, la quantité de gaz adsorbée à l'équilibre en fonction de la pression de ce gaz au-dessus de l'adsorbant ; lorsque le gaz peut donner lieu à une condensation tridimensionnelle à la température de l'expérience, on exprime habituellement la pression d'équilibre par rapport à la pression de vapeur saturante à cette température et on parle de pression relative d'équilibre.

La détermination de la quantité de gaz adsorbée se fait habituellement soit par volumétrie gazeuse, soit par gravimétrie soit encore par mesure des variations de concentration du gaz adsorbable dans un gaz vecteur, à l'aide d'un détecteur catharométrique. Ces trois méthodes sont habituellement utilisées pour une détermination discontinue d'un nombre limité de points de l'isotherme d'adsorption. On a cherché depuis longtemps à éviter les limitations de cette procédure discontinue (limitations en résolution et limitations en commodité expérimentale) par l'utilisation d'une procédure d'introduction lente et continue du gaz adsorbable.

Une telle procédure a été notamment utilisée par Monsieur W.B INNES tel que décrit dans la publication Analitical Chemistry en 1951 , 23 p 759 à 763 mais à un débit de l'ordre de 66 mm3 par seconde (aux conditions normales de température et de pression) qui s'avère bien trop rapide, la plupart du temps, pour assurer des conditions de quasi-équilibre, c'est-à-dire telles qu'à tout instant la pression mesurée "au vol" au-dessus de l'adsorbant coïncide, dans des limites fixées à l'avance et dépendant de la qualité de mesure souhaitée (par exemple, à 1 % près) avec la pression d'équilibre thermodynamique vers laquelle on tendrait après avoir arrêté, à cet instant même, l'introduction de gaz adsorbable supplémentaire. Cette procédure d'introduction lente et continue du gaz adsorbable a été utilisée avec succès en gravimétrie d'adsorption, tel que décrit dans la publication "Progress in Vacuum micro balance Techniques" vol 3 édité par C.EYRAUD et ESCOUBES p 83 à 92, en 1975, avec recherche des conditions correctes de quasi-équilibre et avec des vitesses d'adsorption non constantes mais aussi faibles que 0,07 mm3/sec, donc mille fois plus faibles que dans les travaux précédemment cités. Cette procédure a été utilisée en volumétrie d'adsorption tel que décrit dans la Revue Générale de Thermique n 171 de 1976 p 257 à 241 et a permis, dans certaines conditions, d'obtenir des vitesses d'introduction constantes du gaz adsorbable comprises entre 1,7 et 3,4 mm3/sec pour le tracé continu des isothermes d'adsorption d'azote sur des gels de silice. Cette procédure continue a été également utilisée, en gravimétrie d'adsorption pour le tracé complet d'isothermes d'adsorption-désorption d'azote ou de vapeur d'eau, tel que décrit dans la Revue Thermochimica Acta en 1978, 24 p 391 à 397.

Différents brevets ont été pris sur les procédés et méthodes d'analyses ci-dessus, ainsi que sur du matériel permettant d'appliquer ces procédés et ces méthodes, on peut citer en particulier les brevets concernant les méthodes discontinues, tel que celui de Micrométrics Instrument déposé aux USA le 8/04/68 sous le n US 719562 (US-A-3464273) et étendu à la France ensuite, celui d'EURATUM déposé le 10/12/69 sous le n LU 59979 (LU-A-59979), et celui du laboratoire des Ponts et Chaussées déposé le 18/5/83 sous le n FR 8308242 (FR-A-2546301) ; en ce qui concerne la méthode continue, la Société OMICRON Technology Corporation a déposé un brevet le 9/9/1982 sous le n US 416164 (US-A-4489593), non étendu à l'Europe, et qui reprend même dans ses revendication la méthode générale et certaines méthodes particulières décrites pourtant dans les publications ci-dessus et antérieures et exposant l'état de la technique en la matière.

En effet, l'idée d'une adsorption à vitesse très lente et éventuellement constante a séduit de nombreux chercheurs depuis plusieurs années car elle permet de tracer une isotherme d'adsorption de façon continue avec une infinité de points de quasi-équilibre et donc d'améliorer les mesures et en particulier en déduire l'aire spécifique avec plus de précisions ; de nombreux essais ont été ainsi réalisés et exposés depuis 1976 pour améliorer cette méthode la plus intéressante et la plus demandée à ce jour. Cependant l'amélioration des mesures obtenues se heurtait jusqu'à la présente invention à la nécessite d'opérer à des débits d'adsorption compris entre 0,03 et 3 mm3 (aux conditions normales de température et de pression : TPN) par seconde afin d'assurer les conditions de quasi-équilibres satisfaisantes : il est en effet difficile d'une part d'obtenir un tel débit, d'autre part de le garder stable pendant la durée d'une expérience (entre 15 min et 15 h) compte tenu des variations de la pression atmosphérique et de l'augmentation de la pression de quasi-équilibre en cours de l'adsorption, et enfin de pouvoir le mesurer.

Divers moyens sont utilisables, à ce jour, pour assurer ce faible débit : vannes de fuite réglables de haute précision telles que celles qu'on utilise pour l'étalonnage des spectomètres de masse, filtres de poudre métallique frittée, tubes capillaires étirés (de verre ou de métal), diaphragmes percés au laser à un diamètre de l'ordre du μm. Néanmoins, pour maintenir un débit constant, lorsque la pression en aval varie de 0 à 40 000 pascals, tous nécessitent une mesure permanente du débit (dans une gamme particulièrement délicate à mesurer) et une contre-réaction à toute variation (par action sur la vanne de fuite réglable ou sur la pression en amont). On relève peu de Brevets déposés en France pour la mesure de ces faibles débits gazeux, tel que celui de la Société CURADOM déposé le 19 Mai 1983 sous le n FR 8308657 (FR-A-2546292=, ou de Monsieur R. GSALDER déposé le 15 Septembre 1977 sous le n FR 7728534 (FR-A-2403546), ou de Monsieur G. SAMMAN déposé le 29 Juin 1977 sous le n FR 7719900 (FR-A-2400694), et par ailleurs, aucun équipement disponible sur le marché ne permet d'assurer les caractéristiques des performances nécessaires pour une mesure précise de l'adsorption tel que décrit précédemment ; même les débits-mètres régulateurs thermiques les plus performants de la Société Emerson Electric/division Brook donnent une gamme de mesure de débit la plus faible entre 0 et 80 mm3/sec, avec un seuil de détection et de précision de plus ou moins 0,8 mm3/sec seulement.

Une manière connue d'obtenir un faible débit constant même avec une variation de pression aval possible et de réaliser un régulateur dans lequel la vitesse des molécules de gaz est sonique : pour cela il est connu qu'il suffit que le rapport de pression amont et aval, de part et d'autre de l'orifice du régulateur soit supérieur à un certain rapport critique, au-delà duquel le débit n'est alors proportionnel qu'au diamètre dudit orifice et à la pression seule amont. Il a été réalisé ainsi des régulateurs soniques de microdébit gazeux en perçant au laser, à un diamètre inférieur au micromètre une lame d'acier inoxydable ou tout autre matériau, y compris un rubis. Malheureusement la résistance à l'écoulement des gaz créée par ses orifices, qui s'ils sont de faible diamètre sont alors également de faible épaisseur, est trop faible pour permettre des performances de précision, de stabilité de débit et de faible gamme de microdébits.

Le problème posé est de pouvoir réaliser un régulateur sonique de débit gazeux, permettant un débit aussi faible et stable que 0,03 mm3/sec, et restant constant avec une précision meilleure que 1 % pour une pression amont fixe et constante, et une pression aval variant entre le vide et le dixième au moins de la pression amont.

Une solution au problème posé est un dispositif comportant un régulateur de faible débit gazeux à vitesse d'écoulement sonique utilisable dans tout appareil connu de mesures d'adsorption et de désorption gazeuxe, caractérisé en ce qu'il est constitué d'un tube de métal ductile de faible section, par exemple en cuivre, dont une faible partie de sa longueur est écrasée de telle façon que la paroi interne dudit tube est en contact sur elle-même, lequel tube est monté sur un moyen de raccordement assurant d'une part l'étanchéité autour de celui-ci, et d'autre part son montage dans ledit appareil de mesure d'adsorption et de désorption gazeuse, de telle façon qu'il assure l'alimentation continue d'un très faible débit gazeux dans cet appareil malgré une contre pression variable dans celui-ci entre le vide et au moins le dixième de la pression amont d'alimentation.

Une autre solution au problème posé est un procédé de fabrication d'un régulateur de très faible débit gazeux à vitesse d'écoulement sonique utilisable dans tout appareil connu de mesures d'adsorption et de désorption gazeuse fonctionnant à des pressions d'utilisation données et dans lequel on veut introduire un gaz à un débit très faible choisi, caractérisé en ce que :

– on prend un tube de métal ductile de faible section par exemple en cuivre d'une épaisseur de paroi suffisamment forte pour supporter lesdites différences de pression gazeuse d'utilisation ;

– on monte ledit tube sur un moyen de raccordement assurant d'une part l'étanchéité autour de celui-ci, et d'autre part son montage dans ledit appareil, lequel moyen est montée près d'une extrémité dudit tube à distance suffisante pour permettre l'opération suivante qui peut être réalisée également préalablement ;

– on écrase ledit tube sur une faible longueur entre ladite bride et l'extrémité correspondante ci-dessus ;

– on branche ledit moyen de raccordement et ledit tube sur tout appareil de volumétrie étalonné et connu, et on envoie un gaz à une pression donnée d'étalonnage par une extrémité du tube et on mesure par exemple l'augmentation de pression dans le volume connu où débouche l'autre extrémité et dont la pression initiale est choisie en fonction de la plage d'étalonnage retenue et de la pression amont du gaz envoyé ;

le sens de passage du gaz dans le débit mètre est indifférent, de l'extrémité pincée vers l'extrémité non pincée ou inversement, le premier sens de passage est préférable pour des pressions amonts élevés.

– on détermine en continu le débit ainsi obtenu et on vérifie que celui-ci est constant et correspond au plus à la valeur choisie sur toute la plage de mesures de la variation de la pression aval voulue et si ce n'est pas le cas on continue l'opération d'écrasement en augmentant légèrement le pincement du tube et on vérifie l'étalonnage jusqu'à obtenir au plus le débit souhaité compte tenu desdites pressions d'utilisation retenues initialement.

Le résultat est un nouveau procédé de fabrication d'un nouveau régulateur sonique pouvant assurer de très faibles débits pour des mesures d'adsorption et de désorption gazeuse.

Les avantages d'un tel procédé et d'un tel régulateur sont multiples car ils permettent de réaliser des mesures d'une très grande précision sur de grandes gammes de pression, et de fabriquer des régulateurs d'une manière très fiable, sûre et peu onéreuse. En effet, le matériel de base est simple à trouver en utilisant tout type de matériau ductile, tel que le cuivre qui est le moins couteux, mais aussi de l'argent ou de l'or, et la mise en oeuvre du procédé de fabrication est facile à réaliser : seul l'étalonnage demande quelques précautions mais on utilise pour cela les appareils de mesure connu, de mesure volumétrique et de pression. De plus il n'y a pas à priori de limite maximale à la résistance qu'oppose, à l'écoulement des gaz de tel régulateur à tuyere pincée, ni de limite maximum d'épaisseur de paroi du tube en sorte qu'il est possible d'appliquer en amont si nécessaire, une pression de plusieurs MPa afin d'étendre le domaine du régime sonique en fonction de la pression aval.

L'utilisation de tel régulateur à très faible débit, soit de 0,025 à 25 mm3/sec, avec une bonne stabilité, remplace donc avantageusement tout type de débitmètre connu et rappelé précédemment, qui sont très sophistiqués avec des contrôles et des régulations électroniques et qui de toute façon ont un seuil de détection limite, du au principe même de leur conception, qui est au-dessus de ce qui est souhaitable pour une bonne mesure en quasi-équilibre continu de pression pour un isotherme d'adsorption ; seuls les régulateurs réalisés par le procédé de la présente invention répondent à ces critères. Il offrent aussi la possibilité de réaliser des appareils de mesure très performants avec lesquels on peut alors élaborer diverses procédures et méthodes de mesure très précises et fiables, telle que la mesure rapide de l'aire spécifique ou la mesure de désorption gazeuse.

La description suivante se réfère aux dessins annéxés, qui représentent, sans aucun caractère limitatif, des exemples de réalisation suivant les procédés et les dispositifs de l'invention, et qui sont donnés à titre d'illustration mais d'autres réalisations et applications peuvent être envisagées.

La figure 1a représente une vue en coupe d'un moyen de fabrication avec une bille.

La figure 1b représente une vue en coupe d'un moyen de fabrication par écrasement avec un dièdre.

La figure 1c représente une vue en coupe d'un moyen de fabrication par écrasement avec un ou deux rouleaux.

La figure 2 représente un montage d'un régulateur sur une bride.

La figure 3 représente un exemple de courbe de pression.

La figure 4 représente un schéma de montage d'un régulateur dans un appareil de mesure d'adsorption desorption gazeuse.

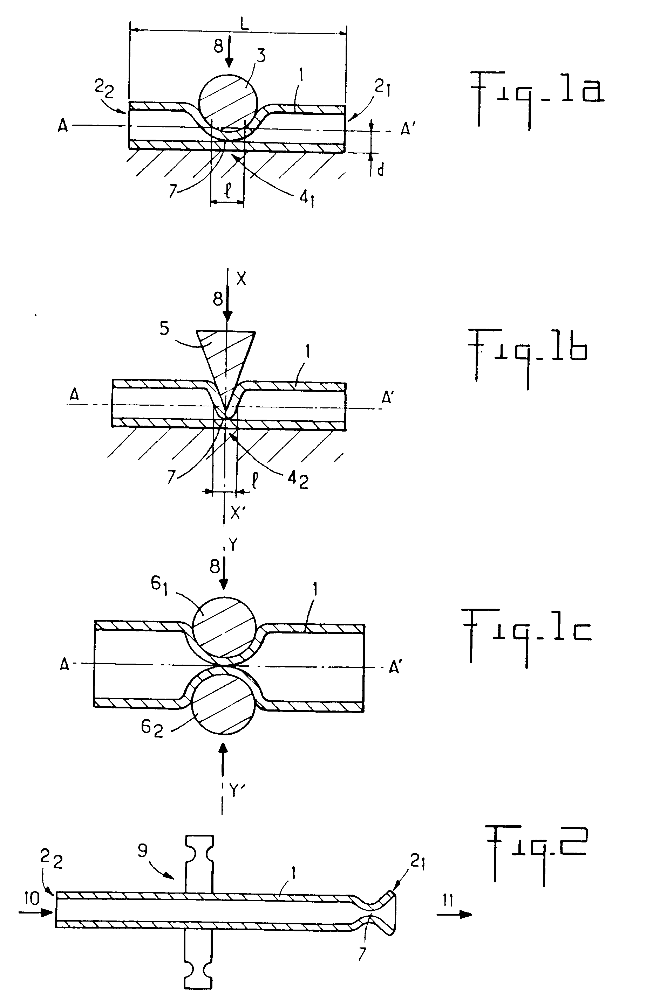

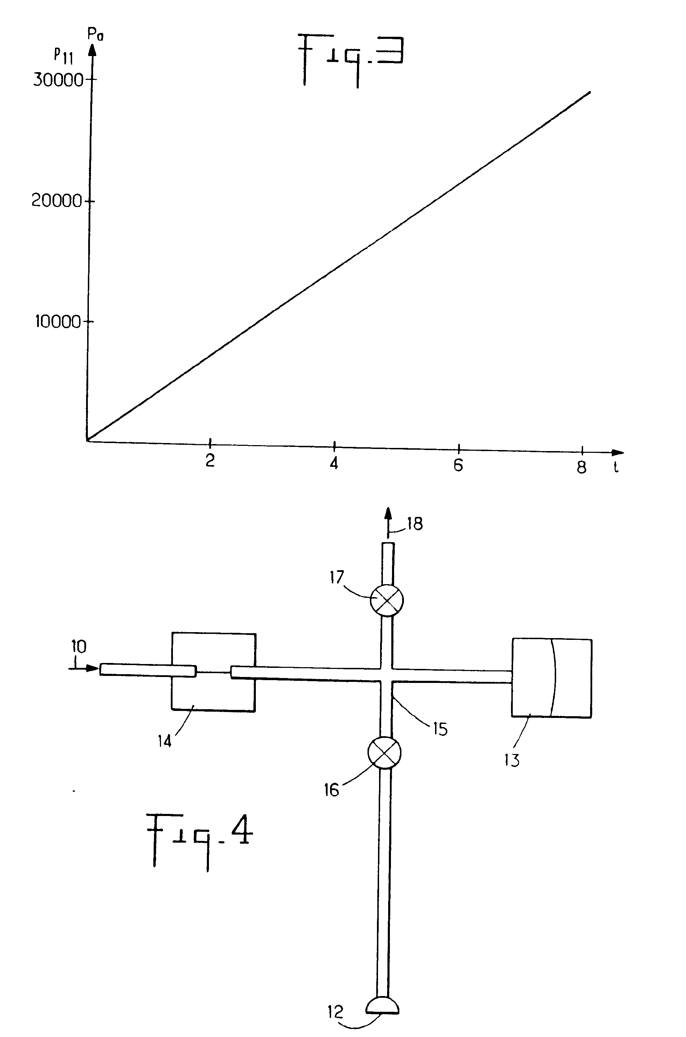

La figure 1a représente une vue en coupe d'un tube 1 de métal ductile de faible section, par exemple en cuivre, mais pouvant être aussi en acier ductile, en platine, en argent ou en or, et d'une longueur L telles que ces 2 extrémités 2.1 et 2.2 puisse être raccordées à un appareil de mesure tel que décrit dans les figures 2 et 4.

On place ledit tube 1 dans un moyen de serrage permettant de pouvoir écraser une faible partie de sa longueur 1 de façon à ce que la paroi interne du tube vient pratiquement en contact sur elle-même et puisse laisser une section de passage 7 libre inférieure au micromètre carré. Pour cela on peut utiliser d'un côté une bille 3 de diamètre supérieure à la largeur du tube 1, ou à son diamètre si celui-ci est un cylindre (d'autres formes de sections peuvent être envisagées), et de l'autre côté une enclume 4.1 contre laquelle on place ledit tube 1 : on écrase alors celui-ci avec la bille qu'on rapproche de l'enclume 4.1 par tout moyen de serrage 8 jusqu'à une distance d correspondant au débit sonique maximum choisi, et suivant l'étalonnage et le procédé déjà décrit précédemment. Cette distance est fonction de l'épaisseur dudit tube (soit au plus égale au double de celle-ci), des pressions d'utilisation retenue et du débit maximum voulu. Si nécessaire on recuit la partie déformée entre deux opérations de serrage et d'étalonnage pour stabiliser la déformation obtenue.

La figure 1b représente une vue en coupe d'un deuxième moyen de fabrication, par écrasement, d'un régulateur de débit suivant l'invention : le tube 1 est dans cet exemple pincé entre d'un côté une surface 4.2 faisant enclume et de l'autre côté un dièdre 5, lequel dièdre est rapproché de la surface 4.2 par tout moyen 8 et tel que décrit dans la figure 1a. La surface 4.2 peut être quelconque il suffit que son intersection avec le plan XX' passant par l'arête dudit dièdre et dans lequel s'effectue le déplacement nécessaire à l'écrasement, est une ligne convexe de rayon de courbure supérieur à celui dudit tube 1 . L'avantage d'utiliser un tel moyen d'écrasement par dièdre et que la longueur 1 ainsi pincée est petite, or plus celle-ci est faible, plus la section de passage 7 est faible et plus le domaine de fonctionnement sonique de la tuyère ainsi formée est large.

La figure 1c représente une vue en coupe d'un autre moyen de fabrication, par écrasement du tube 1 entre d'un côté un rouleau 6.1 , et de l'autre côté un deuxième rouleau 6.2 ; en fait, ce deuxième rouleau peut être remplacé par toute surface faisant butée et dont l'intersection avec le plan YY' passant par l'axe de rouleau 6.1 et dans lequel s'effectue le déplacement nécessaire à l'écrasement, est une ligne convexe de rayon de courbure supérieur à celui dudit tube (1). Tout moyen de serrage 8 permet de rapprocher les rouleaux 6.1 et 6.2 et on applique alors le procédé de fabrication d'étalonnage déjà décrit précédemment comme pour les figures 1a et 1b.

Les trois moyens d'écrasement ci-dessus ne sont pas limitatifs et sont cités à titre d'exemple : on peut en effet assurer l'écrasement du tube également soit par une constriction annulaire créée par une pression hydraulique ou le déplacement circulaire d'un rouleau, soit par plusieurs formes géométriques, tel que 4 cylindres parallèles à l'axe dudit tube.

La figure 2 représente un montage de régulateur réalisé par exemple suivant l'une des méthodes décrites dans les figures 1a, 1b, 1c, lequel régulateur est constitué du tube 1 dont une partie 7 est écrasée pour constituer la tuyère d'écoulement sonique et tout moyen de raccordement 9 par exemple une bride à ultravide à joints métalliques. Cette bride 9 assure d'une part l'étanchéité autour du tube 1 et d'autre part permet le montage de l'ensemble sur tout circuit de mesure tel que la décrit la figure 4 ; cette bride peut être montée préalablement à l'opération de serrage sur le tube et à une distance suffisante de l'extrémité 2.1 pour permettre ladite opération de serrage et d'écrasement.

L'autre extrémité 2.2 est raccordée à une alimentation de gaz sous pression 10 devant être envoyé à débit constant dans l'enceinte 11 où se font les mesures de volumétrie de pression et d'adsorption. On sait en effet que pour une vitesse subsonique des molécules de gaz dans la tuyère 7, le débit massique de ce gaz est :

$$dm/dt \ = \ k1 \ x \ S7 \ x \ \sqrt{k2 \ (P10 - P11)}$$

où S7 est la section minimale de passage de la tuyère, k1 et une constante dépendant du facteur d'expansion du gaz, k2 est une autre constante dépendant de la densité du gaz sous la pression P10 amont, et P11 est la pression à la sortie de la tuyère 7. Il est possible en théorie d'éliminer partiellement l'incidence d'une variation de la pression aval P11 sur le débit massique en imposant un régime sonique tel que dans la région 7 de la tuyère les molécules atteignent la vitesse du son : pour cela il faut que le rapport P11/P10 des pressions aval et amont soit en-dessous d'un seuil critique qui est égal pour l'air à 0,53. Alors le débit massique s'écrit $\dfrac{k3 \ x \ S7 \ x \ P10}{\sqrt{T1}}$ soit donc pour une température T1 donnée et une pression amont P10 fixe, un débit constant. Pour que celui-ci soit très faible, compte tenu que les autres paramètres doivent pouvoir être choisis en fonction des essais recherchés, on ne peut jouer que sur la section S7 dont le procédé suivant l'invention permet d'obtenir des valeurs très faibles satisfaisantes. En particulier avec ce procédé on peut choisir et obtenir un débit maximum d'injection de gaz par la tuyère 7 dans le volume 11 compris entre 0,025 et 25 mm3/sec, restant constant à 1 % près de variations maximum pour une pression aval P11 variant de 0 à 100 000 pascals.

La figure 3 représente un exemple de courbe de pression obtenue en montant un régulateur de débit tel que décrit et réalisé suivant le procédé de la présente invention sur un appareil de volumétrie continu permettant des mesures d'adsorption désorption. La pression P10 amont d'alimentation d'un régulateur avec de l'azote et pour l'utilisation retenue pour cet essai est de 350 000 pascals et le volume de l'enceinte 11 fermé dans lequel le vide a été réalisé préalablement puis dans lequel est envoyé le débit de gaz suivant la description de la figure 2 est de 25 cm3 : la courbe de la figure 3 donne alors l'augmentation de pression P11 en fonction du temps T exprimé en heure ; celle-ci est parfaitement régulière prouvant donc que le débit est bien constant et stable ; celui-ci est de 0,25 mm3/sec et reste en effet constant à 0,5 % près de variation maximum pour la pression P10 amont retenue d'utilisation de 350 000 Pa et pour une pression aval P11 variant de 0 à 30 000 Pa.

D'autres essais et réalisations peuvent être faites et on peut ainsi réaliser tout dispositif de mesure en continu d'adsorption et de désorption gazeuse avec un régulateur de microdébit suivant les caractéristiques et les procédés de la présente invention.

La figure 4 représente un schéma de montage d'un régulateur sonique dans un appareil de mesure connu d'adsorption désorption gazeuse le plus simple que l'on puisse imaginer. Cet appareil comprend d'une manière connue:

– une ampoule 12 contenant un échantillon du matériau adsorbant et maintenu à la température souhaitée (par exemple 77 K pour l'adsorption d'azote en vue d'une détermination d'aire spécifique par la méthode BET (Brunauer-Emmett-Teller) connue telle que d'écrite dans les recommandations d' l'IUPAC (Union Internale de Chimie Pure et Appliquée) pour la présentation des données de l'adsorption gazeuse.

– un capteur 13 de pression absolue permettant un enregistrement continu de la pression de quasi-équilibre.

– un régulateur 14 alimenté en gaz adsorbable sous pression constante 10. Cette pression devra être, en théorie au moins égale (et, en pratique, supérieure) au quotient de la pression aval maximale par le "rapport critique" correspondant au passage du régime sub-sonique au régime d'écoulement sonique pour le gaz considéré. Ledit régulateur 14 ou débimètre à débit constant est un régulateur tel que par exemple celui décrit dans la figure 2 et pour assurer un débit maximum choisi compris entre 0,25 et 25 mm3/sec, constant à 1 % près de variation maximum pour une pression aval dans ledit appareil ou dispositif variant de 0 à 100 000 Pa.

– un volume de référence 15 (ou volume d'appareil) de valeur constante et limité par le régulateur 14, le capteur de pression 13 et les vannes 16 et 17.

Le tracé d'un isotherme d'adsorption s'effectue de la manière suivante :

– Au départ, l'ampoule 12 contenant l'adsorbant est sous vide et la vanne 16 est fermée.

– La vanne 17 (vers le vide 18) est ouverte et crée dans le volume de référence 15 un vide dynamique avec une pression initiale résiduelle Pi résultant d'un équilibre entre le flux de gaz entrant à travers le régulateur 14 (la pression en amont de celui-ci étant maintenue constante par un manodétendeur appoprié) et le flux de gaz pompé à travers la vanne17.

– Cette pression Pi est mesurée, ainsi que la température à laquelle est maintenu le volume 15 et on en déduit la quantité de gaz initiale présente dans ce volume.

– On enregistre, sur enregistreur graphique ou dans la mémoire d'un micro-ordinateur, le signal de pression en fonction du temps.

– On prend comme origine du temps, sur cet enregistrement, l'instant où l'on cesse le pompage en fermant la vanne 17 et où l'on commence l'adsorption en ouvrant la vanne 16.

– L'enregistrement de pression de quasi-équilibre en fonction du temps, c'est-à-dire en fonction de la quantité de gaz introduite se convertit aisément, en tenant compte de la quantité de gaz non adsorbée (et qui est proportionnelle à la pression) en une isotherme d'adsorption donnant, en toute rigueur, la quantité de gaz adsorbée par gramme d'adsorbant en fonction de la pression de quasi-équilibre.

En cas de doute, la validité des conditions de quasi-équilibre choisies est facilement vérifiée par une deuxième expérience avec une vitesse d'adsorption plus lente (donc par exemple avec une masse plus grande d'adsorbant). Si les deux isothermes d'adsorption coïncident, c'est que la "vitesse spécifique d'adsorption" est satisfaisante dans les deux cas. Sinon, il est souhaitable d'opérer à vitesse plus lente. D'où l'intérêt et la nécessité d'un régulateur de débit à vitesse sonique sans limitation du côté des débits les plus faibles.

Dans une installation de dispositif telle que décrit dans la figure 4, il peut être monté plusieurs régulateurs de débit à vitesse sonique en parallèle avec des vannes d'isolation afin de disposer de plusieurs débits possibles d'introduction pour effectuer différentes mesures.

Une application intéressante du dispositif décrit dans la figure 4 est la mesure rapide d'aire spécifique par la méthode BET à l'azote qui fait appel à la méthode connue dite "à 1 point". Au lieu de déterminer les 3 à 5 points de l'isotherme d'adsorption recommandés en général pour l'application de la méthode on ne détermine qu'un seul point de l'isotherme pour une pression d'équilibre choisie a priori au voisinage du tiers de la pression de vapeur saturante de l'azote (elle-même voisine de 100 000 Pa à la température habituelle de l'adsorption). En faisant la double hypothèse que l'énergie d'adsorption est élevée sur la première couche et que l'équation BET s'applique correctement sur toute cette première partie de l'isotherme (dont on ne connait qu'un point) on aboutit à une valeur de l'aire spécifique. Cette valeur peut différer de plusieurs dizaines de % de celle qu'on calcule à l'aide de plusieurs points de l'isotherme d'adsorption, surtout lorsqu'il s'avère que l'équation BET ne s'applique qu'à une portion limitée de l'isotherme ou lorsque l'énergie d'adsorption n'est pas beaucoup plus élevée sur la première couche que sur les suivantes (comme c'est le cas pour l'adsorption d'azote sur des polymères organiques ou pour l'adsorption d'argon -aussi utilisable pour la méthode BET- sur de très nombreux).

Pour pallier à ces limitations de la "méthode BET à 1 point" mais en conserver la rapidité le dispositif suivant l'invention permet la procédure suivante :

On détermine avec ledit dispositif, lors d'une étude préliminaire qui n'est à effectuer qu'une seule fois pour chaque type d'adsorbant (c'est-à-dire de nature chimique et de texture approximativement fixée. Par exemple : gel de silice d'aire spécifique comprise entre 10 et 200 m g-1, soufre pulvérulent d'aire spécifique comprise entre 1 et 50 m g-1, charbon actif d'aire spécifique apparente comprise entre 200 et 800 m g-1...) une isotherme d'adsorption en quasi-équilibre jusqu'à une pression égale à 40 % de la valeur saturante.

On applique les critères de validité de l'équation BET déjà connue, on détermine la région d'application correcte de cette équation (en termes de pression d'équilibre), on en déduit la quantité de gaz adsorbée pour constituer une monocouche, on relève la pression d'équilibre correspondante et la pente de l'isotherme d'adsorption en ce point. Ces deux dernières données sont à conserver en mémoire et à utiliser dans la procédure rapide ci-dessous, chaque fois qu'on étudiera un adsorbant du même type.

Pour chaque nouvel échantillon du même type que ci-dessus : on introduit, à l'aide du régulateur de débit sonique, le gaz adsorbable à vitesse constante mais relativement rapide jusqu'à atteindre la pression de formation de la monocouche telle qu'elle a été déterminée au paragraphe précédent.

On cesse l'introduction et on attend l'obtention de l'équilibre désiré, caractérisé par une valeur prédéterminée de la pente de l'enregistrement de la pression en fonction du temps. Idéalement, cette pente devrait être choisie nulle mais les impératifs de temps conduisent à lui assigner une valeur finie (par exemple : variation de la pression lue inférieure au 1/1000 de sa valeur sur 30 secondes). La quantité alors adsorbée, n'est le plus souvent pas discernable de celle qui serait adsorbée pour un équilibre parfait, lui même difficile à atteindre en toute rigueur puisqu'il suppose la surpression totale de toute fluctuation de température de l'appareil de volumétrie (quel qu'il soit), de toute fluctuation de niveau du bain cryogénique permettant d'assurer le maintien de température de l'adsorbant et de toute variation de la pression atmosphérique susceptible de modifier la température d'ébullition de ce dernier.

On détermine la quantité adsorbée à cet instant, la pression d'équilibre finale étant obligatoirement un peu plus faible que la pression exacte de formation de la monocouche.

Grâce à la pente connue de l'isotherme d'adsorption, on ramène la quantité ci-dessus à celle qui serait adsorbée sous la pression exacte de formation de la monocouche pour cette catégorie d'échantillon.

Les avantages de cette procédure sont les suivants :

\* l'introduction du gaz adsorbable à débit fini (ordres de grandeur commodes : 12 à 25 mm3/sec permet d'éviter les graves perturbations d'équilibre (parfois en partie irréversibles et génératrices d'erreur, parfois entraînant une mise à l'équilibre plus longue) introduites par la méthode de volumétrie discontinue conventionnelle.

\* l'écart réel, mais modéré, à l'équilibre permet d'arrêter l'introduction à une pression pré-déterminée qui sera peu supérieure à la pression finale d'équilibre.

\* il en résulte, grâce notamment à la correction possible à partir de la pente de l'isotherme, que la quantité nécessaire pour former la monocouche, selon une application non simplifiée de l'équation BET, est déterminée avec précision.

\* il est toujours loisible, à titre de comparaison, d'exploiter par la procédure simplifiée dite "BET à 1 point" le point unique qui vient d'être déterminé sur l'isotherme d'adsorption, avec les limitations qui ont été rappelées ci-dessus.

\* la durée de l'expérience de routine pourra être typiquement, après refroidissement de l'adsorbant, de 5 à 10 minutes pour l'obtention de l'équilibre d'adsorption final, soit une durée de l'ordre du 1/4 d'heure, comme on l'attend d'une mesure rapide de routine.

Une autre utilisation intéressante du dispositif régulateur suivant l'invention concerne les mesures de désorption gazeuse.

L'exploitation du régulateur de débit à vitesse d'écoulement sonique suivant l'invention est différente pour une expérience de désorption, elle même nécessaire, principalement dans le cas de l'azote, pour l'évaluation de la distribution de taille des mésopores (ouverture des pores comprises entre 2 et 50 nm). Ces pores jouent un rôle important dans la plupart des adsorbants d'intérêt technologique (à l'exclusion des tamis moléculaires, dont tous les pores, inférieurs à 2 nm, peuvent alors être étudiés à partir de la seule branche d'adsorption de l'isotherme). La taille des mésopores se déduit de la relation (fondée sur la loi de Kelvin) qui lie la pression à laquelle se vide (en désorption) une catégorie donnée de pores avec le rayon de courbure du ménisque liquide situé à l'ouverture de ces pores (à condition qu'ils aient au préalable été saturés d'adsorbable par condensation capillaire).

On peut utiliser un appareil connu semblable à celui qui est schématisé Fig 4 mais on impose cette fois en permanence le vide ou, en tout cas, dans le cas de l'azote, une pression inférieure à 20 000 Pascal en amont 10 qui devient alors l'aval du régulateur 14. L'expression déjà donnée du débit en régime sonique est =

$$\text{débit max.} = \frac{K3 \times S7 \times P11}{\sqrt{T1}} \text{ cette équation nous}$$

montre que ce débit est proportionnel à la pression en amont, qui est cette fois-ci la pression de quasi-équilibre au-dessus de l'échantillon. Dans le cas de l'azote, la branche de désorption ne diffère de la branche d'adsorption que pour des pressions toujours comprises (sauf anomalie ne permettant habituellement plus un calcul significatif de la distribution de taille des pores) entre 40 000 à 100 000 Pascal. Le débit massique obtenu en régime sonique varie donc proportionnellement à cette pression de quasi-équilibre. Celle-ci étant enregistrée en permanence, le débit est connu à tout instant et la quantité intégrale de gaz restant adsorbé sur l'échantillon situé dans l'ampoule 12 en est déduite. C'est parce que la "dynamique de l'expérience est beaucoup plus réduite en désorption (on laisse en effet désorber le matériau d'échantillon à travers ledit régulateur 14 jusqu'à ce que la valeur de la pression à l'intérieur dudit appareil tombe à une pression finale égale à 2,5 fois environ plus faible que la pression initiale) qu'en adsorption (rapport atteignant 10 dans certaines expériences), qu'une telle procédure à débit variable est applicable pour l'étude de la désorption.

On note que les expressions de débit sont données ici en valeur massique dans les équations, et en valeur volumique dans les chiffres, la conversion et la relation entre les deux étant connue en fonction de la densité des gaz utilisés, de leur température et de leur pression lors des essais.

La présente invention n'est pas limitée au mode de réalisation et aux applications décrites ci-dessus et qui ne constituent que des exemples auxquels des modifications et des variantes peuvent lêtre apportées.

## Revendications

1. Dispositif comportant un régulateur de faible débit gazeux à vitesse d'écoulement sonique utilisable dans tout appareil connu de mesures d'adsorption et de désorption gazeuse, caractérisé en ce qu'il est constitué d'un tube (1) de métal ductile de faible section, par exemple en cuivre, dont une faible partie de sa longueur est écrasée de telle façon que la paroi interne (7) dudit tube est en contact sur elle-même en laissant une section de passage (7) libre, lequel tube est monté sur un moyen (9) de raccordement assurant d'une part l'étanchéité autour de celui-ci, et d'autre part son montage dans ledit appareil de mesure d'adsorption et de désorption gazeuse, de telle façon qu'il assure l'alimentation continue d'un très faible débit gazeux dans cet appareil malgré une contre pression variable dans celui-ci entre le vide et au moins le dixième de la pression amont d'alimentation.

2. Dispositif comportant un régulateur de très faible débit gazeux à vitesse d'écoulement sonique et suivant la revendication 1 caractérisée en ce que ledit très faible débit gazeux a une valeur maximum comprise entre 0,025 et 25 mm3/sec, et que cette dite valeur est constante à 1 % près de variation maximum pour une contre pression aval dans ledit appareil de mesure variant entre 0 et 100 000 pascals.

3. Procédé de fabrication d'un régulateur de très faible débit gazeux à vitesse d'écoulement sonique utilisable dans tout appareil connu de mesures d'adsorption et de désorption gazeuse fonctionnant à des pressions d'utilisation données et dans lequel on veut introduire un gaz à un débit très faible choisi, caractérisé en ce que :

– on prend un tube (1) de métal ductile de faible section par exemple en cuivre d'une épaisseur et d'une épaisseur de paroi suffisamment forte pour supporter les dites différents de pression gazeuse d'utilisation ;

– on monte ledit tube sur un moyen de raccordement (9) assurant d'une part l'étanchéité autour de celui-ci, et d'autre part son montage dans ledit appareil, lequel moyen est montée près d'une extrémité (2) dudit tube à distance suffisante pour permettre l'opération suivante qui peut être réalisée également préalablement ;

– on écrase ledit tube sur une faible longueur entre ledit moyen de raccordement (9) et l'extrémité (2) correspondante ci-dessus ;

– on branche ledit moyen (9) de raccordement et ledit tube (1) sur tout appareil de volumétrie étalonné et connu, et on envoie un gaz à une pression donnée d'étalonnage par une extrémité (2.2) du tube (1) et on mesure par exemple l'augmentation de pression dans le volume connu où débouche l'autre extrémité (2.1) et dont la pression initiale est choisie en fonction de la plage d'étalonnage retenue et de la pression amont du gaz envoyé;

– on détermine en continu le débit ainsi obtenu et on vérifie que celui-ci est constant et correspond au plus à la valeur choisie sur toute la plage de mesures de la variation de la pression aval voulue et si ce n'est pas le cas on continue l'opération d'écrasement en augmentant légèrement le pincement du tube et on vérifie l'étalonnage jusqu'à obtenir au plus le débit souhaité compte tenu desdites pressions d'utilisation retenues initialement.

4. Procédé de fabrication d'un régulateur selon la revendication n 3 caractérisé en ce que l'on écrase ledit tube par un moyen de serrage (8) constitué d'un côté par une bille (3) de diamètre supérieur à celui de la largeur dudit tube (1) et de l'autre côté d'une enclume (4.1) contre laquelle on place ledit tube, on écrase ensuite avec la bille (3) qu'on rapproche de l'enclume jusqu'à une distance correspondant au débit sonique maximum choisi.

5. Procédé de fabrication d'un régulateur suivant la revendication n 3 caractérisé en ce que l'on écrase ledit tube (1) par un moyen de serrage (8) constitué d'un côté par un rouleau (6.1) et de l'autre côté par toute surface (6.2) faisant butée et dont l'intersection avec le plan passant par l'axe dudit rouleau et dans lequel s'effectue le déplacement nécessaire à l'écrasement, est une ligne convexe de rayon de courbure supérieur à celui dudit tube (1).

6. Procédé de fabrication d'un régulateur selon la revendication n 3 caractérisé en ce que l'on écrase ledit tube par un moyen de serrage (8) constitué d'un côté par un dièdre (5) et de l'autre côté par toute surface (4.2) faisant enclume et dont l'intersection avec le plan passant par l'arrêt dudit dièdre et dans lequel s'effectue le déplacement nécessaire à l'écrasement, est une ligne convexe de rayon de courbure supérieur à celui dudit tube (1).

7. Procédé de fabrication d'un régulateur suivant l'une quelconque des revendications 3 à 6 caractérisé en ce que le débit maximum choisi est compris entre 0,025 et 25 mm3/sec, qu'il reste constant à au plus 1 % près de variation au maximum pour une pression aval variant de 0 à 100 000 Pa.

8. Procédé de fabrication d'un régulateur suivant l'une quelconque des revendications 3 à 6 caractérisé en ce que le débit maximum choisi est 0,25 mm3/sec, qu'il reste constant à 0,5 % près de variation au maximum pour une pression amont d'utilisation retenue de 350 000 Pa et pour une pression aval variant de 0 à 30 000 Pa.

9. Procédé de mesure rapide d'aire spécifique d'un matériau adsorbant utilisant un dispositif de régulation de très faible débit gazeux à vitesse d'écoulement sonique réalise suivant l'une quelconque des revendications 1 et 2, et monté dans tout appareil connu de mesure d'adsorption gazeuse, caractérisé en ce que :

– on introduit par ledit régulateur le gaz adsorbable à vitesse constante et relativement rapide jusqu'à atteindre la pression de formation de monocouche telle que déterminée préalablement pour ledit adsorbant suivant le tracé de l'isotherme d'adsorption continue obtenue avec ledit dispositif ;

– on cesse l'introduction et on attend l'obtention de l'équilibre désiré défini par une valeur prédéterminée de la pente de l'enregistrement de la pression en fonction du temps ;

– on détermine alors la quantité adsorbée à cet instant, et grâce à la pente connue de l'isotherme d'adsorption obtenue préalablement, on ramène la quantité ci-dessus à celle qui serait adsorbée sous la pression exacte de formation de la monocouche pour cette catégorie d'échantillon ;

10. Procédé de mesure de desorption gazeuse utilisant un dispositif de régulation de très faible débit gazeux à vitesse d'écoulement sonique réalisé suivant l'une quelconque des revendications 1 à 2 et monté dans tout appareil connu de mesure d'adsorption désorption gazeuse caractérisé en ce que :

– on impose en permanence du vide à l'extérieur (10) du dit régulateur (14), par exemple à une valeur de pression inférieure à 20 000 Pascal pour de l'azote ;

– on laisse désorber le matériau situé dans l'ampoule (12) à très faible débit à travers ledit régulateur (14), jusqu'à ce que la valeur de la pression à l'intérieur dudit appareil tombe à 2,5 fois environ de celle de la pression initiale ;

– on enregistre en permanence ladite pression intérieure de quasi équilibre et le débit massique obtenu dans ledit régulateur sonique variant proportionnellement à cette pression, on calcule la quantité intégrale de gaz restant adsorbée sur ledit échantillon de matériau.

**Patentansprüche**

1. Vorrichtung mit einem Regulator für einen mit Schallgeschwindigkeit strömenden geringen Gasdurchsatz zur Verwendung in einem Hälftenen Apparat für Gasadsorptions- und -desorptionsmessungen, dadurch gekennzeichnet, daß sie gebildet ist durch ein Rohr (1) mit geringem Querschnitt aus dehnbarem Metall, z.B. aus Kupfer, wobei ein geringer Teil seiner Länge derart gequetscht ist, daß die Innenwand des Rohres unter Freilassung eines freien Durchtritts (7) mit sich selbst in Kontakt ist, welches Rohr an einem Verbindungsmittel (9) angeordnet ist, das einerseits die Dichtigkeit um dieses herum und anderseits seinen Einbau im Apparat für Gasadsorptions- und -desorptionsmessungen gewährleistet, sodaß die kontinuierliche Beaufschlagung dieses Apparats mit einem sehr geringen Gasdurchsatz trotz eines zwischen Vakuum und zumindest einem Zehntel des stromaufwartigen Beaufschlagungsdrucks variablen Gegendrucks in diesem gewährleistet ist.

2. Vorrichtung mit einem Regulator für einen mit Schallgeschwindigkeit strömenden sehr geringen Gasdurchsatz gemäß Anspruch 1, dadurch gekennzeichnet, daß der ganz geringe Gasdurchsatz einen Maximalwert zwischen 0,025 und 25 mm³/s aufweist und daß dieser Wert bis auf 1 % maximaler Schwankung bei einem stromabwärtigen Gegendruck in diesem Meßapparat zwischen 0 und 100.000 Pascal konstant ist.

3. Verfahren zur Herstellung eines Regulators für einen mit Schallgeschwindigkeit strömenden sehr geringen Gasdurchsatz zur Verwendung in einem Hälftenen Apparat für Gasadsorptions- und -desorptionsmessungen, der bei gegebenen Anwendungsdrücken arbeitet und in welchen ein Gas mit einem bestimmten sehr geringen Durchsatz eingeleitet werden soll, dadurch gekennzeichnet, daß

– ein Rohr (1) mit geringem Querschnitt aus dehnbarem Metall, z.B. Kupfer, und mit einer Dicke und einer Wandstärke genommen wird, die ausreichend groß ist, um den Anwendungsgasdruckunterschieden standzuhalten;

– das Rohr an einem Anschlußmittel (9) angeordnet wird, welches einerseits die Dichtigkeit um dieses herum und anderseits dessen Einbau in besagten Apparat gewährleistet, welches Mittel nahe bei einem Ende (2) des Rohres in einer Entfernung angeordnet wird, die zur Durchführung des nächsten Arbeitsschritts ausreicht, welcher auch vorher ausgeführt werden kann;

– das Rohr über eine geringe Länge zwischen dem Verbindungsmittel (9) und dem entsprechenden obengenannten Ende gequetscht wird:

– das Anschlußmittel (9) und das Rohr (1) an irgendeinen geeichten und Hälftenen Volumenmeßapparat geschaltet werden und ein Gas mit einem gegebenen Eichdruck über ein Ende (2.2) des Rohres (1) eingeleitet wird und z.B. der Druckanstieg im Hälftenen Volumen, in den das andere Ende (2.1) mündet und dessen Anfangsdruck als Funktion des herangezogenen Eichbereichs und des Drucks stromaufwärts vom eingeleiteten Gas gewählt ist, gemessen wird;

– kontinuierlich der so erhaltene Durchsatz bestimmt wird und überprüft wird, ob dieser konstant ist und höchstens dem Wert entspricht, der aus dem gesamten Meßbereich der Veränderung des gewollten stromabwärtigen Drucks gewählt wird, und wenn dies nicht der Fall ist, der Quetschvorgang durch leicht verstärkte Klemmung des Rohres fortgesetzt wird und die Eichung kontrolliert wird, bis höchstens der gewünschte Durchsatz unter Berücksichtigung der ursprünglich aufrechtgehaltenen Anwendungsdrücke erzielt wird.

4. Verfahren zur Herstellung eines Regulators nach Anspruch 3, dadurch gekennzeichnet, daß das Rohr mit einem Klemmittel (8) gequetscht wird, welches auf einer Seite durch eine Kugel (3) mit einem Durchmesser, der größer als die Weite des Rohres (1) ist, und auf der anderen Seite durch einen Amboß (4.1) gebildet ist, gegen den das Rohr plaziert wird, danach mit der Kugel (3), die bis zu einem Abstand entsprechend dem gewählten maximalen Durchsatz mit Schallgeschwindigkeit an den Amboß angenähert wird, gequetscht wird.

5. Verfahren zur Herstellung eines Regulators nach Anspruch 3, dadurch gekennzeichnet, daß das Rohr (1) mit einem Klemmittel (8) gequetscht wird, welches auf einer Seite durch eine Rolle (6.1) und auf der anderen Seite durch jede Oberfläche (6.2) gebildet ist, die einen Anschlag bildet und deren Schnittlinie mit der durch die Achse der Rolle gehenden Ebene, in welcher die zum Quetschen notwendige Verschiebung stattfindet, eine konvexe Linie mit einem Krümmungsradius größer als jener des Rohres (1) ist.

6. Verfahren zur Herstellung eines Regulators nach Anspruch 3, dadurch gekennzeichnet, daß das Rohr mit einem Klemmittel (8) gequetscht wird, welches auf einer Seite durch ein Dieder (5) und auf der anderen Seite durch jede Oberfläche (4.2) gebildet ist, die einen Amboß bildet und deren Schnittlinie mit der durch die Spitze des Dieders gehenden Ebene, in welcher die zum Quetschen notwendige Verschiebung stattfindet, eine konvexe Linie mit einem Krümmungsradius größer als jener des Rohres (1) ist.

7. Verfahren zur Herstellung eines Regulators nach einem der Ansprüche 3 bis 6, dadurch gekennzeichnet, daß der gewählte maximale Durchsatz zwischen 0,025 und 25 mm³/s beträgt und daß er bis auf höchstens 1 % maximaler Schwankung bei einem stromabwärtigen Druck zwischen 0 und 100.000 Pascal konstant bleibt.

8. Verfahren zur Herstellung eines Regulators nach einem der Ansprüche 3 bis 6, dadurch gekennzeichnet, daß der gewählte maximale Durchsatz 0,025 mm³/s beträgt und daß er bei einem auf 350 000 Pa gehaltenen Anwendungsdruck stromaufwärts und einem Druck stromabwärts zwischen 0 und 30.000 Pa bis auf 0,5 % maximaler Schwankung konstant bleibt.

9. verfahren zur raschen Messung der spezifischen Fläche eines adsorbierenden Materials unter Verwendung einer Vorrichtung zur Regulierung eines mit Schallgeschwindigkeit strömenden sehr geringen Gasdurchsatzes nach einem der Ansprüche 1 und 2, welche in einem Hälftenen Gasadsorptionsmeßapparat installiert ist, dadurch gekennzeichnet, daß:

– über den Regulator das adsorbierbare Gas mit konstanter und relativ rascher Geschwindigkeit eingeleitet wird, bis der Druck zur Bildung der Monoschicht, wie er zuvor für dieses Adsorptionsmittel gemäß dem mit besagter Vorrichtung erhaltenen Diagramm der kontinuierlichen Adsorptionsisotherme bestimmt wurde, erreicht ist;

– die Einleitung beendet und auf die Erzielung des gewünschten Gleichgewichts durch einen vorbestimmten Wert der Steigung der Aufzeichnung des Drucks als Funktion der Zeit gewartet wird;

– dann die zu diesem Augenblick adsorbierte Menge bestimmt und mit Hilfe der Hälftenen Steigung der zuvor erhaltenen Adsorptionsisotherme die obige Menge auf jene Menge gebracht wird, die unter dem genauen Druck zur Bildung der Monoschicht für diese Probenkategorie adsorbiert würde.

10. Verfahren zur Messung der Gasdesorption unter Verwendung einer Vorrichtung zur Regulierung eines mit Schallgeschwindigkeit strömenden sehr geringen Gasdurchsatzes nach einem der Ansprüche 1 und 2, welche in einem Hälftenen Gasadsorptions/desorptionsmeßapparat installiert ist, dadurch gekennzeichnet, daß:

– außerhalb (10) des Regulators (14) ein permanentes Vakuum, z.B. auf einen Druckwert von unter 20.000 Pascal für Stickstoff, angelegt wird;

– das in der Ampulle (12) befindliche Material mit einem ganz geringen Durchsatz durch den Regulator (14) desorbieren gelassen wird, bis der Druckwert innerhalb des Apparates auf etwa 2,5mal den Anfangsdruck abfällt;

– der Innendruck des Quasi-Gleichgewichts und der im Schallregulator erzielte Massendurchsatz, der sich proportional zu diesem Druck verändert, permanent aufgezeichnet werden und die an dieser Materialprobe adsorbiert bleibende Gesgesamtmenge errechnet wird.

## Claims

1. Apparatus comprising a gas flow regulator operating at a low flow rate and at sonic velocity and usable in any conventional equipment for measuring gaseous adsorption and desorption, characterized in that it is constituted by a tube of small cross-section (1) in ductile metal, such as copper, having a small portion of its length crushed in such a manner that the inside wall (7) of said tube makes contact with itself while leaving a free flowing-section (7), said tube being mounted on connection means (9) ensuring, on the one hand, the sealing around the tube, and on the other hand, the mounting of said tube in said apparatus for measuring gaseous adsorption and desorption in such a manner as to enable the tube to provide a continuous feed of gas to said equipment at a very low flow rate despite a back pressure therein which may vary from vacuum to at least one-tenth of the upstream feed pressure.

2. Apparatus comprising a gas flow regulator operating at a very low flow rate and at sonic velocity according to claim 1, characterized in that said very low gas flow rate has a maximum value lying in the range 0.025 and 25 mm³/sec, and in that said value remains constant to within 1% of maximum variation for a downstream back pressure in said measuring equipment lying in the range 0 to 100,000 Pa.

3. Method of making a gas flow regulator which operates at a very low flow rate and at sonic velocity and which is usable in any conventional equipment for measuring gaseous adsorption and desorption, operating at given utilization pressures, and into which a gas is to be injected at a selected very low flow rate, characterized in that it consists in :
   – taking a tube of small cross-section (1) in ductile metal, such as copper, having a wall thickness which is sufficient to withstand said various utilization gas pressures ;
   – mounting said tube on connection means (9) ensuring, on the one hand, the sealing around the tube, and on the other hand, the mounting of said tube in said apparatus, said means being mounted close to an end (2) of said tube and at a sufficient distance therefrom to enable the following operation which can also be performed beforehand ;
   – crushing a short length of said tube between said connection means (9) and the above-mentioned corresponding end (2) ;
   – connecting said connection means (9) together with said tube (1) on any known calibrated volumetric apparatus, and sending a gas at one end (2.2) of the tube (1) at a given calibration pressure, and, for example, measuring the increase in pressure in the known volume into which the other end (2.1) issues and of which the initial pressure is selected as a function of the desired calibration range and of the upstream pressure of the supplied gas ; and
   – determining continuously the flow rate obtained in this way and checking that said flow rate is constant and corresponds at the most to the selected value through the entire range of measurements of the variation of the desired downstream pressure, and if it does not, the crushing operation is continued by slightly increasing the extent to which the tube is pinched, and calibration is checked again until a flow rate is obtained which is no greater than the desired flow rate given said initially selected utilization pressures.

4. Method of making a regulator according to claim 3, characterized in that said tube is crushed by clamping means (8) constituted on one side by a ball(3) of diameter greater than the width of said tube (1) and on the other side by an avil (4.1) against which said tube is placed and subsequently crushed by the ball (3) which is moved towards the anvil until a distance is reached which corresponds to the selected maximum sonic flow rate.

5. Method of making a regulator according to claim 3, characterized in that said tube is crushed by clamping means (8) constituted on one side by a roller (6.1) and on the other side by any surface (6.2) suitable for constituting an abutment and whose intersection with the plane containing the axis of said roller and containing the displacement direction for performing the crushing operation is a convex line whose radius of curvature is greater than that of said tube (1).

6. Method of making a regulator according to claim 3, characterized in that said tube is crushed by clamping means (8) constituted on one side by a prism (5) and on the other side by any surface (4.2) suitable for constituting an anvil and whose intersection with the plane including the edge of said prism and including the direction in which the displacement for obtaining crushing takes place is a convex line whose radius of curvature is greater than that of said tube (1).

7. Method of making a regulator according to any one of claims 3 to 6, characterized in that the selected maximum flow rate lies in the range 0.025 and 25 mm³/sec, and in that the flow rate remains constant to within 1% of maximum variation for a downstream back pressure in said measuring equipment lying in the range 0 to 100,000 Pa.

8. Method of making a regulator according to any one of claims 3 to 6, characterized in that the selected maximum flow rate is 0.25 mm³/sec, and in that it remains constant to within 0.5% of maximum variation for a selected upstream utilization pressure of 350,000 Pa, and for a downstream pressure varying over the range 0 to 30,000 Pa.

9. Method of rapidly measuring the specific area of an adsorbent material using a gas flow regulator apparatus according to any one of claims 1 and 2, operating at a very low flow rate and at sonic velocity, and mounted, in any conventional gaseous adsorption measuring equipment, characterized in that :
   – the adsorbable gas is introduced into the equipment via said regulator at a constant and relatively rapid rate until the monolayer formation pressure is reached, with said pressure being previously determined for said adsorbent material using a continuous adsorption isotherm plot obtained using said apparatus ;
   – the introduction is stopped and the desired equilibrium is allowed to occur by a predetermined value of the slope in a record of pressure as a function of time ; and

– the quantity adsorbed at this instant is determined and converted to the quantity which would be adsorbed at the exact monolayer formation pressure for a sample of the same category by means of the known slope of the previously obtained adsorption isotherm.

10. Method of measuring gaseous desorption using a gas flow regulator apparatus according to any one of claims 1 to 2, operating at a very low flow rate and at sonic velocity, and mounted in any conventional equipment for measuring gaseous adsorption and desorption, characterized in that :

– a vacuum is permanently maintained outside (10) of said regulator (14), for example by maintaining a nitrogen pressure of less than 20,000 Pa.

– the material situated in the bulb (12) is allowed to desorb at a very low flow rate through said regulator (14) until the pressure inside said equipment falls to about 2.5 times less than its initial pressure ; and

– said quasi-equilibrium internal pressure is measured on a permanent basis, and given that the mass flow rate obtained through said sonic regulator varies proportionally to said pressure, the total quantity of gas remaining adsorbed on said sample of material is calculated.

**12**

Fig.1a

Fig.1b

Fig.1c

Fig.2

Fig.3

$P_a$

$P_{11}$

30000

20000

10000

2    4    6    8    $t$

18

17

10

14    15

16    13

12

Fig.4

14